# EUROPEAN PATENT APPLICATION

(11) **EP 1 035 007 A2**
(43) Date of publication of application: **13.09.2000**
(21) Application number: 99830427.3
(22) Date of filing: 02.07.1999
(51) Int. Cl.: B62J 1/16

(54) **A support and attachment device for rear bicycle seats, in particular for baby carrying**

(30) Priority: 09.03.1999 IT MI990135 U
(71) Applicant: Stamp S.r.l., 24060 Telgate (Bergamo) (IT)
(72) Inventor: Erli, Pierangelo, 24060 Telgate (Bergamo) (IT)
(74) Representative: Ghioni, Carlo Raoul Maria

(57) **Abstract**

A support and attachment device for baby-carrying rear bicycle seats comprises a support structure (2) made up of two elongated elements (3) to be Symmetrically disposed astride the bicycle rear wheel (4) and having first end portions (3a) secured to the seat (9) and second end portions (3b) intended for fastening to the arms of the bicycle seat stay (11).

## Description

The present invention relates to a support and attachment device for rear bicycle seats for baby carrying, of the type comprising a support structure for a rear seat to be directly engaged in cantilevered fashion to the frame of a bicycle.

It is known that baby-carrying rear seats are fastened to a bicycle with the aid of appropriate support and attachment means. In accordance with some known techniques, this means engages the seat directly to the bicycle frame at several frame points by a support structure and appropriate attachment blocks. For instance, the attachment points can be arranged both on the arms of the bicycle rear fork or seat stay and on a frame tube or seat post placed under the saddle.

According to another known technique, the seat support structure is made up of one or two flexible steel elements disposed in side by side relationship and engaged at their ends to the seat post, or frame upright supporting the saddle, in cantilevered fashion by means of a single and usually bulky block.

The last-mentioned technical solution gives the seat a fair springing and enables unevennesses on the road surface to be absorbed at least partly.

However, the above described known techniques have a serious limit because they cannot be applied to all bicycles and in particular to bicycles having frames of non-traditional conformation such as those provided with streamlined or aerodynamic structures disposed around and at the rear of the saddle-supporting frame upright and used, for example, to form a space adapted to house batteries in the case of electric bicycles.

In fact, these streamlined structures prevent access to said seat post so that the latter cannot be used for applying attachment blocks or clamps thereto, in view of fastening of the seat support structure.

Also in the case of traditional frames, i.e. without streamlined structures on the seat post under the saddle, often several different attachments are already present, for water-bottles, pumps and various accessories for example, that occupy that frame section and prevent availability of an appropriate length to house the seat attachment block.

It should be also pointed out that in the case in which a single attachment block can be secured to the saddle-supporting seat post, the load weighing on the seat is greatly spaced apart in a horizontal direction from the attachment point, i.e. gives rise, at this attachment point, to a high bending moment requiring use of an attachment block of very strong, and as a result very bulky structure, in addition to the presence of flexible steel elements of rather important section in order to form a conveniently stout seat-supporting structure, all that for the purpose of avoiding yielding risks and problems in terms of reliability to fatigue.

Practically, known support and attachment devices of the type to be mounted in cantilevered fashion are either inconsistent with some bicycle frames or, if applied to the seat post, do not have optimal features in terms of bulkiness and weight.

Under this situation, it is a general aim of the present invention to provide a support and attachment device for rear bicycle seats capable of substantially obviating the mentioned drawbacks.

Within this general scope, it is an important object of the present invention to provide a support and attachment device for rear seats practically adapted to be applied to all types of bicycle frames even when the latter are equipped with wide streamlined structures covering the saddle-supporting seat post so as to make it inaccessible or when other attachments for a pump or various fittings are already applied to said seat post.

Another important object of the invention is to provide a support and attachment device that, in addition to ensuring an appropriate comfort to the baby sitting in the seat, is adapted to limit stresses transmitted to the frame by the load weighing on the seat itself and therefore restrain the mechanical-resistance features and, as a result, bulkiness and weight of the device, while keeping a high reliability degree.

The specified objects are substantially achieved by a device which is characterized in that said support structure comprises two elongated support elements to be symmetrically disposed astride the bicycle rear wheel and having first end portions secured to the seat and second end portions intended for fastening to the arms of the bicycle seat stay and in that it comprises, for each of said second end portions of the support elements, at least one attachment clamp adapted to removably fix said end portion to a respective arm of the seat stay.

Description of a preferred embodiment of a support and attachment device in accordance with the invention is now given hereinafter, by way of non-limiting example, with the aid of the accompanying drawings, in which:

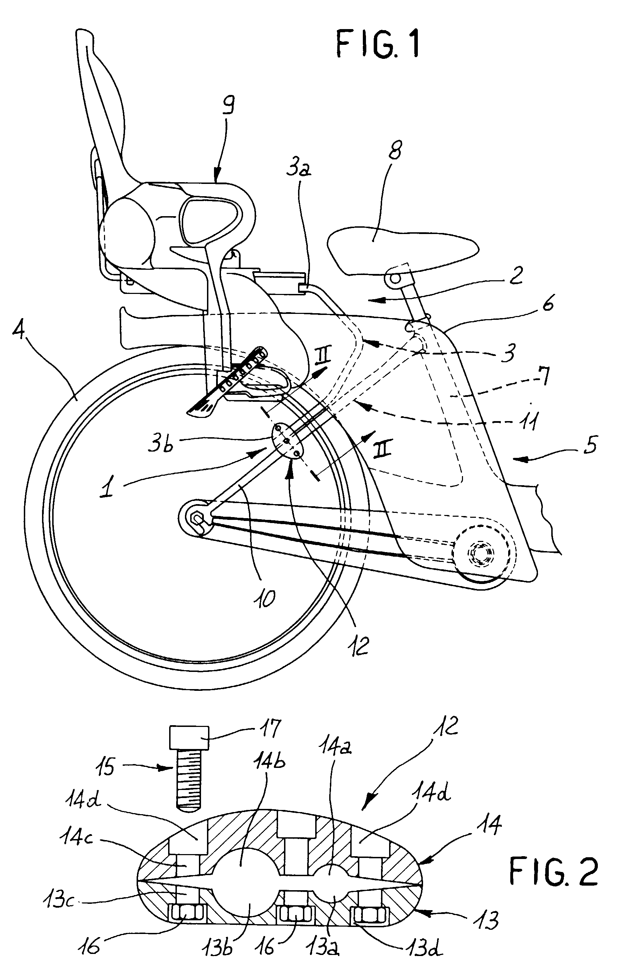

- Fig. 1 is a side view of the device in accordance with the invention; and
- Fig. 2 shows a section taken along line II-II in Fig. 1 adapted to highlight an attachment clamp of the device to an enlarged scale.

With reference to the drawings, the device in accordance with the invention has been generally identified by reference numeral 1.

It comprises a support structure 2 formed of two elongated support elements 3. The support elements 3 are symmetrically disposed astride the rear wheel 4 of a bicycle 5, which may comprise a streamlined structure or fairing 6 disposed around and rearwardly of a seat post 7 carrying a saddle 8.

Practically fairing 6 may form a space adapted to house one or more batteries for example, should bicycle 5 be of an electric type. Due to the presence of fairing 6, the seat post 7 is not accessible from the outside and therefore it cannot be used as a frame portion for connection thereto of attachment blocks or clamps of any type.

Each support element 3 has a first end portion 3a integral with a seat 9, of a type known per se, and a second end portion 3b intended for fastening to an arm 10 of the bicycle seat stay 11.

The device further comprises, for each of the end portions 3b of the support elements 3, at least one attachment clamp 12 adapted to removably fix said second end portion to the respective arm 10.

Practically, in an original manner, the support structure 2 is directly connected in cantilevered fashion with the bicycle frame exclusively at the two arms 10 forming the rear fork 11.

More specifically, the elongated support elements 3 have a substantially arc-shaped conformation extending in a manner adapted to position the second end portions 3b at intermediate sections of arms 10.

In this way, the length of the horizontally-extended cantilevered portion of seat 9 with respect to the attachment clamps 12 is of a limited amount and consequently also limited is the bending moment due to the load weighing on the seat and occurring at the attachment clamps themselves. Said clamps can therefore be of unimportant sizes and thus are not cumbersome.

The support elements 3 too, defined by tubular rods characterized by a flexibility adapted to springing of seat 9 may have a relatively reduced cross section and therefore a reduced weight as compared with the flexible support elements of the known art which are engaged at a single attachment point disposed on the seat post under the saddle.

Each attachment clamp 12 comprises two jaws 13, 14 having cavities 13a, 13b, 14a and 14b adapted to house the second end portion 3b of a support element 3 and a section of a corresponding arm 10 of the seat stay 11, respectively.

Jaws 13 and 14 are joined together by tightening means 15 consisting of three bolts for example, that are inserted in through holes 13c and 14c of the jaws themselves. Said jaws externally have recessed seats 13d and 14d adapted to house nuts 16 and the heads 17 of bolts 15.

The invention achieves important advantages.

In fact it enables exclusive use of intermediate sections of the arms of the seat stay as the attachment points to the frame of a bicycle for mounting a baby-carrying rear seat in cantilevered fashion, which intermediate arm sections are usually always accessible in all types of frames. In this way, in addition to achieving springing which is typical of the devices intended for cantilevered support of the seat, problems of inconsistency do not occur between application of the seat itself and the conformation of any frame, even when possible other attachment pieces are present on the saddle-supporting seat post.

## Claims

1. A support and attachment device for rear bicycle seats, in particular for baby carrying, of the type comprising a support structure (2) for a rear seat (9) to be directly engaged in cantilevered fashion with the frame of a bicycle (5),
characterized in that said support structure (2) comprises two elongated support elements (3) to be symmetrically disposed astride the bicycle rear wheel (4) and having first end portions (3a) secured to the seat (9) and second end portions (3b) intended for fastening to the arms (10) of the bicycle seat stay or rear fork (11), and in that it comprises, for each of said second end portions (3b) of the support elements (3), at least one attachment clamp (12) adapted to removably fix said end portion (3b) to a respective arm (10) of the seat stay (11).

2. A device as claimed in claim 1, characterized in that said elongated support elements (3) have a substantially arc-shaped conformation.

3. A device as claimed in claim 1 or 2, characterized in that the end portions (3b) of said support elements are fastened at intermediate sections of said arms (10) of the seat stay (11).

4. A device as claimed in claim 1, characterized in that said elongated support elements (3) are defined by tubular rods of a flexibility adapted to springing of the seat (9).

5. A device as claimed in claim 1, characterized in that each attachment clamp (12) comprises:
- two jaws (13), (14) having cavities (13a, 13b, 14a, 14b) adapted to house said second end portion (3b) of one of the support elements (3) and a section of the corresponding arm (10) of the seat stay (11); and
- tightening means for said jaws.

6. A device as claimed in claim 4, characterized in that said tightening means (15) comprises at least two bolts disposed through said jaws (13, 14) and cooperating with respective nuts (16).
